# EUROPÄISCHE PATENTANMELDUNG

(11) **EP 0 928 712 A1**
(43) Veröffentlichungstag der Anmeldung: **14.07.1999**
(21) Anmeldenummer: 98124796.8
(22) Anmeldetag: 29.12.1998
(51) Int. Cl.: B60K 15/04

(54) **Tankstutzen**

(30) Priorität: 09.01.1998 DE 19800518
(71) Anmelder: HSB Umwelttechnik GmbH, 58675 Hemer (DE)
(72) Erfinder: Schulte, Hubert, 58710 Menden (DE)
(74) Vertreter: Valentin, Ekkehard, Dipl.-Ing.

(57) **Zusammenfassung**

Die vorliegende Erfindung betrifft einen Tankstutzen (1) mit einem Stutzenende (2), auf das von oben ein Deckel (3) aufschwenkbar ist, wobei der Deckel (3) bei abgedecktem Stutzenende (2) verriegelt auf das Stutzenende (2) aufgedrückt ist.

## Beschreibung

Die vorliegende Erfindung betrifft einen Tankstutzen mit einem Stutzenende, das mittels eines Deckels abdeckbar ist.

Derartige Tankstutzen sind weit verbreitet. In der Regel ist der Deckel dabei auf das Stutzenende aufgeschraubt. Durch das Aufschrauben ist das Stutzenende sicher abgedichtet. Nachteilig ist jedoch, daß der Deckel nach dem Abschrauben verlorengehen kann. Ein Befestigen am Tankstutzen mittels eines Verbindungskettchens stellt keine grundlegende Verbesserung dar, da die Kettchen leicht abreißen.

Die Aufgabe der vorliegenden Erfindung besteht somit darin, einen Tankstutzen zu schaffen, bei dem der Deckel nicht verloren werden kann und dennoch weiterhin sowohl ein ungehinderter Zugang zum Stutzenende als auch eine sichere Abdichtung des Stutzenendes möglich ist.

Die Aufgabe wird dadurch gelöst, daß der Deckel auf das Stutzenende aufschwenkbar ist, wobei der Deckel bei abgedecktem Stutzenende verriegelt auf das Stutzenende aufgedrückt ist.

Der Deckel liegt dadurch vollkommen dicht am Stutzenende an und kann sich dann nicht mehr von selbst öffnen.

Das Aufschwenken, Abdichten und Verriegeln kann konstruktiv bspw. dadurch gelöst werden,
- daß der Deckel einen Schwenkarm aufweist, über den der Deckel seitlich vom Stutzenende in einem Schwenklager angelenkt ist,
- daß der Tankstutzen eine Kurbelwelle mit einem Kurbelzapfen mit einem bezüglich der Kurbelwelle exzentrisch angeordneten Kurbelpunkt aufweist,
- daß der Kurbelpunkt über ein Verbindungselement mit einem Hebelpunkt des Schwenkarms verbunden ist, wobei der Hebelpunkt bezüglich des Schwenklagers exzentrisch angeordnet ist, und
- daß das Verbindungselement sowohl mit dem Kurbelpunkt als auch mit dem Hebelpunkt gelenkig verbunden ist,
- so daß der Deckel durch Drehen der Kurbelwelle in bzw. entgegen einer Betätigungsdrehrichtung öffen- bzw. schließbar ist,
- daß beim Schließen des Deckels, also beim Drehen der Kurbelwelle entgegen der Betätigungsdrehrichtung, der Kurbelpunkt die Verbindungsgerade zwischen der Kurbelwelle und dem Hebelpunkt zumindest im wesentlichen erreicht und
- daß unmittelbar danach ein Weiterdrehen der Kurbelwelle durch einen Anschlag gestoppt wird.

Im Ergebnis wird also die Kurbelwelle bei geschlossenem Deckel an einem ihrer Totpunkte bzw. unmittelbar davor oder danach gestoppt, so daß durch einen Versuch, den Deckel direkt anzuheben, keine Drehmomentübertragung auf die Kurbelwelle möglich ist.

Ein selbsttätiges Öffnen des Deckels ist dann besonders sicher verhindert, wenn die Kurbelwelle zumindest bei geschlossenem Deckel entgegen ihrer Betätigungsdrehrichtung über ein Grundfederelement federbelastet ist.

Als Federelement kommen beliebige Elemente in Frage. Im einfachsten Fall ist das Grundfederelement als Schraubenfeder ausgebildet. Es kommen aber auch andere Ausbildungen, z.B. als Gasdruckfeder, in Frage.
Die Federbelastung kann dabei direkt oder indirekt erfolgen. Insbesondere bei direkter Federbelastung ist die Kurbelwelle auch bei geöffnetem Deckel entgegen ihrer Betätigungsdrehrichtung federbelastet. Eine derartige Federbelastung ist besonders sicher.

Wenn das Grundfederelement indirekt auf die Kurbelwelle einwirkt, ist es möglich, daß die Kurbelwelle über das Grundfederelement bei geöffnetem Deckel in ihrer Betätigungsdrehrichtung federbelastet ist. In diesem Fall verharrt der Deckel selbsttätig in seiner geöffneten Stellung, so daß ein besonders einfacher und leichter Zugang zum Stutzenende möglich ist.

Die letztgenannte Ausgestaltung ist noch vorteilhafter, wenn die Kurbelwelle über ein Zusatzfederelement sowohl bei geöffnetem als auch bei geschlossenem Deckel entgegen ihrer Betätigungsdrehrichtung federbelastet ist und sich die von den Federelementen auf die Kurbelwelle ausgeübten Drehmomente bei geöffnetem Deckel ausgleichen, so daß der Deckel selbsttätig in der geöffneten Stellung verharrt.

Insbesondere in diesem Fall ist vorzugsweise der Kurbelwelle eine Betätigungsnase zugeordnet, mittels derer die Kurbelwelle beim Anschließen eines Schlauchs an das Stutzenende ein Stück entgegen ihrer Betätigungsdrehrichtung gedreht wird, so daß bei Entfernen des Schlauchs von dem Stutzenende die von den Federelementen auf die Kurbelwelle ausgeübten Drehmomente die Kurbelwelle selbsttätig entgegen ihrer Betätigungsdrehrichtung drehen und so den Deckel selbsttätig schließen.

Alternativ ist es aber auch möglich, die Federelemente derart zu dimensionieren, daß bei geöffnetem Deckel das von dem Zusatzfederelement entgegen der Betätigungsdrehrichtung auf die Kurbelwelle ausgeübte Drehmoment größer als das von dem Grundfederelement in der Betätigungsdrehrichtung auf die Kurbelwelle ausgeübte Drehmoment ist.
Ein Arretieren des Deckels in der geöffneten Stellung kann in diesem Fall auf einfache Weise dadurch erreicht werden, daß die Kurbelwelle mittels eines Handhebels betätigbar ist und der Handhebel bei geöffnetem Deckel in einer Einrückrichtung in eine Haltenut einrückbar ist.

Wenn der Handhebel durch ein Haltefederelement entgegen der Einrückrichtung federbelastet ist, erfolgt beim Entlasten des Handhebels ein Freigeben des Handhebels.

Wenn der Handhebel durch die Federbelastung des Deckels entgegen der Betätigungsdrehrichtung in der Haltenut haltbar ist, muß zum Freigeben des Handhebels nur der Deckel ein Stück in seiner Öffnungsrichtung bewegt werden.

Wenn beim Anschließen eines Schlauchs an das Stutzenende die Kurbelwelle ein Stück in ihrer Betätigungsdrehrichtung gedreht wird, so daß der Handhebel aus der Haltenut freigegeben wird, erfolgt beim Anschließen des Schlauchs ein automatisches und zwangsweises Freigeben des Handhebels.

Der Handhebel kann beispielsweise durch eine Rampe oder durch Reibung in der Haltenut gehalten werden. Der Handhebel wird aber in der Haltenut ganz besonders sicher gehalten, wenn der Handhebel im eingerückten Zustand in der Haltenut verrastet.

Wenn die Kurbelwelle als durchgehende Kurbelwelle und das Verbindungselement als sichelförmiges Verbindungselement ausgebildet sind, ergibt sich eine besonders stabile Verbindung bei gleichzeitiger Realisierung des erforderlichen Anschlags.

Weitere Vorteile und Einzelheiten ergeben sich aus den weiteren Ansprüchen und der nachfolgenden Schilderung eines Ausführungsbeispiels. Dabei zeigen
- Figur 1: einen Tankstutzen mit einem Stutzenende und einem Deckel im geschlossenen Zustand von der Seite,
- Figur 2: den Tankstutzen von Fig. 1 von hinten,
- Figur 3: den Tankstutzen von Fig. 1 von oben,
- Figur 4: den Tankstutzen von Fig. 1 bei geöffnetem Deckel von der Seite,
- Figur 5: den Tankstutzen von Fig. 1 beim Ansetzen eines Schlauchs von der Seite,
- Figur 6: den Tankstutzen von Fig. 1 bei angesetztem Schlauch von der Seite,
- Figur 7: einen weiteren Tankstutzen mit einem Stutzenende und einem Deckel im geschlossenen Zustand von oben,
- Figur 8: den Tankstutzen von Fig. 7 bei geöffnetem Deckel von oben und
- Figur 9: den Tankstutzen von Fig. 7 bei angesetztem Schlauch von der Seite.

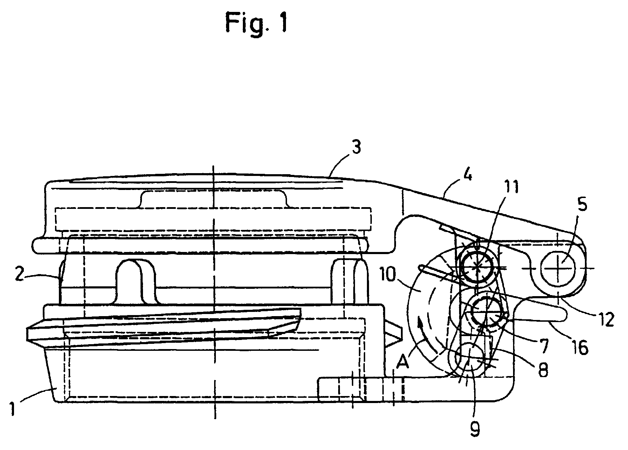

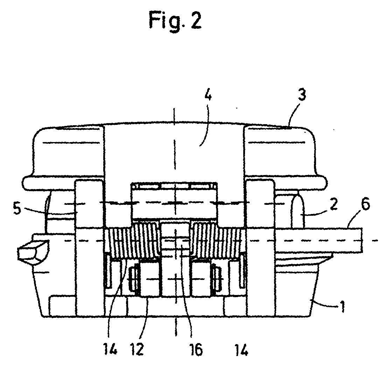

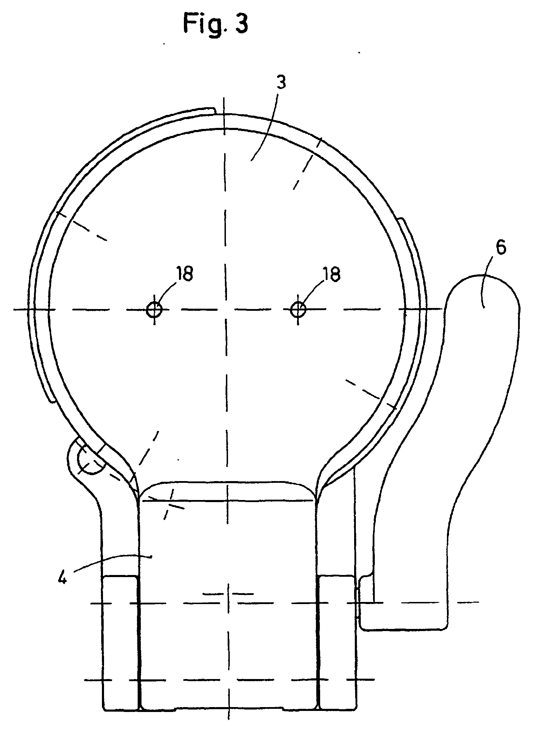

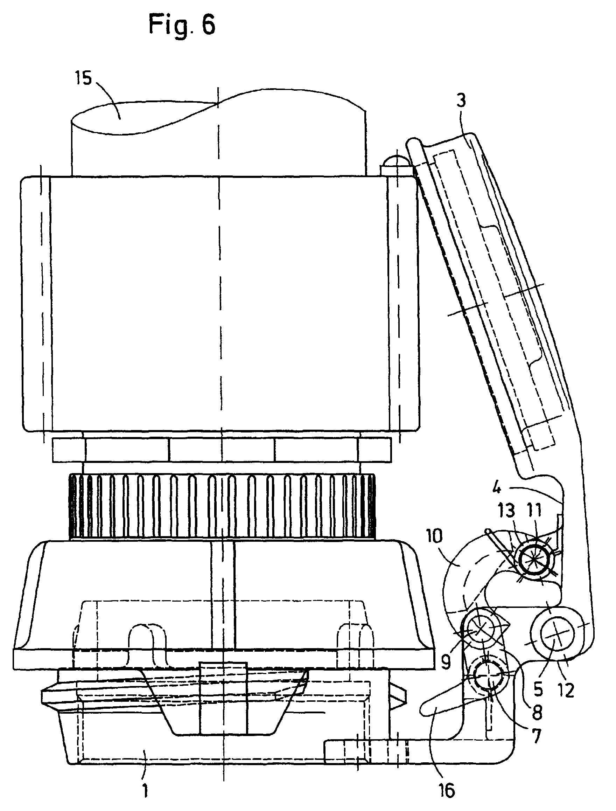

Gemäß den Figuren 1 bis 6 weist ein Tankstutzen 1 ein Stutzenende 2 auf, welches mittels eines Deckels 3 abdeckbar ist. Der Deckel 3 ist dabei von oben auf das Stutzenende 2 aufschwenkbar. Zum Aufschwenken weist der Deckel 3 einen Schwenkarm 4 auf, über den der Deckel 3 in einem Schwenklager 5 angelenkt ist, das seitlich vom Stutzenende 2 angeordnet ist.

Der Deckel 3 wird mittels eines Handhebels 6 betätigt, durch welchen eine Kurbelwelle 7 zum Öffnen des Deckels 3 in einer Betätigungsdrehrichtung A und zum Schließen entgegen der Betätigungsdrehrichtung A drehbar ist.

Die Kurbelwelle 7 weist einen Kurbelzapfen 8 mit einem Kurbelpunkt 9 auf. Der Kurbelpunkt 9 ist dabei bezüglich der Kurbelwelle 7 exzentrisch angeordnet. Der Kurbelpunkt 9 ist über ein Verbindungselement 10 mit einem Hebelpunkt 11 verbunden. Der Hebelpunkt 11 befindet sich am Schwenkarm 4 und ist bezüglich des Schwenklagers 5 exzentrisch angeordnet.

Das Verbindungselement 10 ist sowohl mit dem Kurbelpunkt 9 als auch mit dem Hebelpunkt 11 gelenkig verbunden. Somit ist der Deckel 3 durch Betätigen des Handhebels 6 und ein dadurch bewirktes Drehen der Kurbelwelle in der Betätigungsdrehrichtung A öffenbar. Durch Drehen der Kurbelwelle 7 entgegen der Betätigungsdrehrichtung A ist der Deckel 3 wieder schließbar.

Beim Schließen des Deckels 3, also beim Drehen der Kurbelwelle 7 entgegen der Betätigungsdrehrichtung A, erreicht der Kurbelpunkt 9 die Verbindungsgerade zwischen der Kurbelwelle 7 und dem Hebelpunkt 11 gemäß Ausführungsbeispiel nur im wesentlichen. Dies ist aber hinreichend, auch wenn ein völliges Erreichen der Verbindungsgeraden oder sogar ein geringfügiges Überschreiten der Verbindungsgeraden noch vorteilhafter wäre.

Unmittelbar nach dem Zumindest-im-wesentlichen-Erreichen der Verbindungsgeraden wird ein Weiterdrehen der Kurbelwelle 7 durch einen Anschlag 12 gestoppt. Der Anschlag 12 dient im vorliegenden Fall gleichzeitig als Schwenklager 5. Er könnte aber auch als separater Anschlag 12 ausgebildet sein.

Gemäß Ausführungsbeispiel ist die Kurbelwelle 7 in der geschlossenen Stellung des Deckels 3 also zwischen dem Kurbelpunkt 9 und dem Hebelpunkt 11 angeordnet. Somit kann vom Deckel 3 kein bzw. nur ein sehr geringes Drehmoment auf die Kurbelwelle 7 ausgeübt werden. Der Deckel 3 wird dadurch bei abgedecktem Stutzenende 2 verriegelt auf das Stutzenende 2 aufgedrückt.

Der Tankstutzen 1 weist ein Grundfederelement 13 und ein Zusatzfederelement 14 auf. Die Federelemente 13, 14 sind im vorliegenden Fall als Schraubenfedern ausgebildet.
Das Grundfederelement 13 ist am Hebelpunkt 11 gelagert, das Zusatzfederelement 14 an der Kurbelwelle 7. Bei geschlossenem Deckel 3 ist die Kurbelwelle 7 daher über beide Federelemente 13, 14 entgegen ihrer Betätigungsdrehrichtung A federbelastet. Die Federelemente 13, 14 wirken also bei geschlossenem Deckel 3 gleichsinnig. Ein Öffnen des Deckels 3 kann daher nur durch Betätigung des Handhebels 6, nicht aber durch direktes Nach-oben-Drücken des Deckels 3 erfolgen.

Bei geöffnetem Deckel 3 hingegen ist die Kurbelwelle 7 über das Grundfederelement 13 in der Betätigungsdrehrichtung A federbelastet, durch das Zusatzfederelement 14 weiterhin entgegen der Betätigungsdrehrichtung A. Die Federelemente 13, 14 wirken also bei geöffnetem Deckel 3 gegensinnig.

Je nach Stärke der Federelemente 13, 14 und je nach wirksamen Hebelarmen ist einstellbar, ob sich die von den Federelementen 13, 14 auf die Kurbelwelle 7 ausgeübten Drehmomente bei geöffnetem Deckel ausgleichen oder ob ein resultierendes Drehmoment entgegen der Betätigungsdrehrichtung A verbleibt.

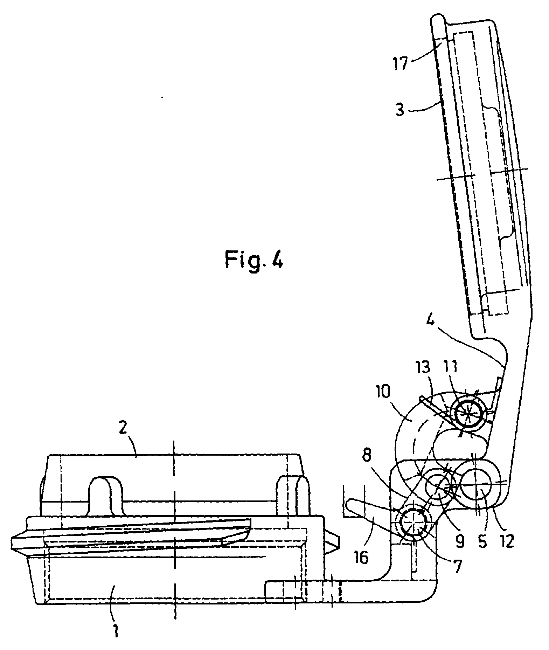

Die Ausgestaltung gemäß dem letztgenannten Fall ist also derart, daß bei geöffnetem Deckel 3 das von dem Zusatzfederelement 14 entgegen der Betätigungsdrehrichtung A auf die Kurbelwelle 7 ausgeübte Drehmoment größer als das von dem Grundfederelement 13 in der Betätigungsdrehrichtung A auf die Kurbelwelle 7 ausgeübte Drehmoment ist. Sie ist besonders sicher, da beim Entfernen eines an den Tankstutzen 1 angeschlossenen Schlauches bzw. beim Loslassen des Handhebel 6 sich der Deckel 3 in jedem Fall schließt. Die Ausbildung gemäß der erstgenannten Alternative ist insofern vorteilhaft, als dann der Deckel 3 selbsttätig in der geöffneten Stellung verharrt. Diese Stellung ist in Figur 4 dargestellt. Dadurch hat eine Bedienungsperson, welche einen Schlauch 15 an den Tankstutzen 1 anschließen will, beide Hände frei. Um ein ungehindertes Anschließen des Schlauches 15 an das Stutzenende 2 zu gewährleisten, ist der Deckel 3 um mindestens 75° nach oben verschwenkbar, vorzugsweise um 83° bis 95°.

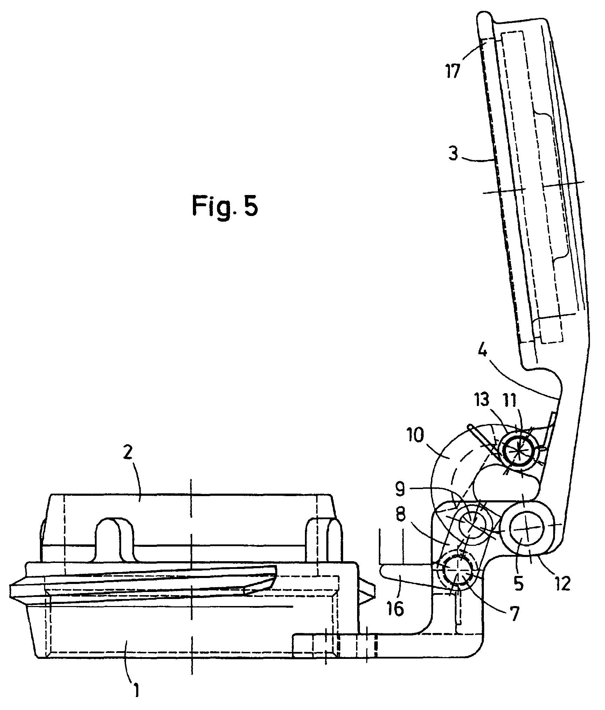

Insbesondere bei der zweiten Alternative ist der Kurbelwelle 7 vorzugsweise eine Betätigungsnase 16 zugeordnet. Die Betätigungsnase 16 ist dabei derart an der Kurbelwelle 7 angeordnet, daß beim Anschließen des Schlauchs 15 an das Stutzenende 2 die Kurbelwelle 7 ein Stück entgegen ihrer Betätigungsdrehrichtung A gedreht wird. Diese Stellung ist in Fig. 5 dargestellt.

Durch das Drehen der Kurbelwelle 7 ein Stück entgegen ihrer Betätigungsdrehrichtung A wird der Deckel 3 ein Stück aus seiner geöffneten Stellung in Richtung auf die geschlossene Stellung bewegt. Hierdurch ändern sich von den Federelementen 13, 14 auf die Kurbelwelle 7 ausgeübten Drehmomente, so daß sich nunmehr ein resultierendes Drehmoment entgegen der Betätigungsdrehrichtung A ergibt. Der Deckel 3 wird dadurch weiter in Richtung auf die geschlossene Stellung zu bewegt, bis der Deckel 3 unter leichtem Druck am Schlauch 15 anliegt. Beim Entfernen des Schlauches 15 vom Stutzenende 2 drehen die von den Federelementen 13, 14 auf die Kurbelwelle 7 ausgeübten Drehmomente die Kurbelwelle 7 dann selbsttätig entgegen ihrer Betätigungsdrehrichtung A. Hierdurch wird der Deckel 3 beim Entfernen des Schlauchs 15 selbsttätig geschlossen.

Wie aus den Figuren 1 bis 6 zu erkennen ist, ist das Verbindungselement 10 als sichelförmiges Verbindungselement 10 ausgebildet. Dies hat den Vorteil, daß die Kurbelwelle 7 in diesem Fall als durchgehende Kurbelwelle 7 ausgebildet sein kann, wodurch die Stabilität und Haltbarkeit des gesamten Hebelmechanismus erhöht wird.

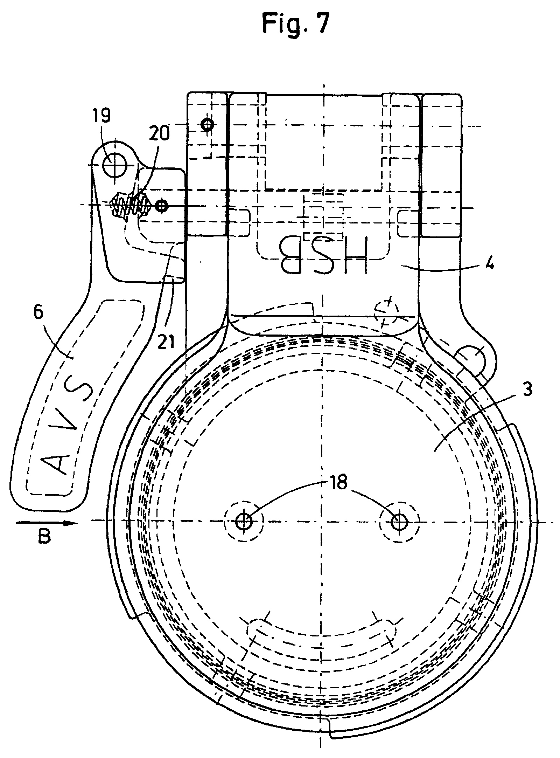

Auch wenn aufgrund der Dimensionierung der Federelemente 13, 14 in der geöffneten Stellung des Deckels 3 ein resultierendes Drehmoment entgegen der Betätigungsdrehrichtung A verbleibt, ist es möglich, den Deckel 3 in seiner geöffneten Stellung zu arretieren. Hierzu ist gemäß Figur 7 der Handhebel 6 in einem Gelenkpunkt 19 angelenkt. Im Ruhezustand ist der Handhebel 6 mittels eines Haltefederelements 20 entgegen einer Einrückrichtung B federbelastet.

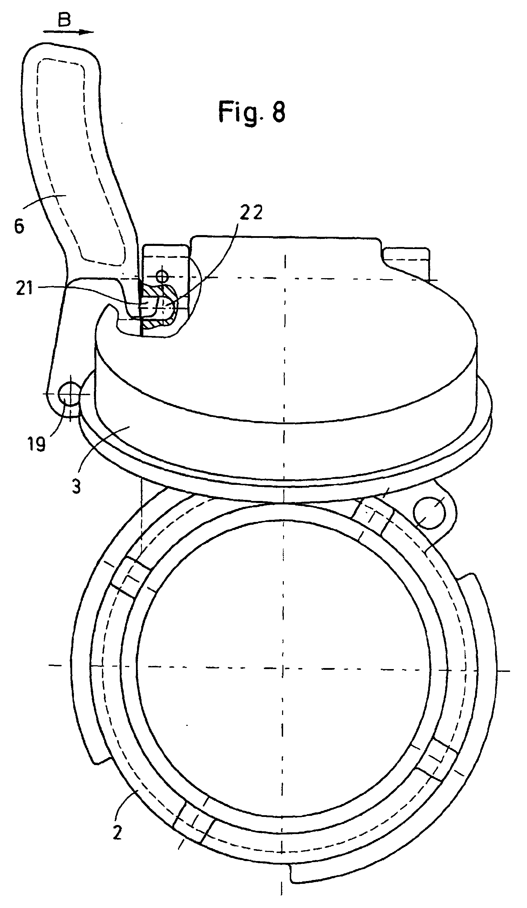

In der geöffneten Stellung des Deckels 3 hingegen ist gemäß Figur 8 ein Vorsprung 21 des Handhebels 6 (bzw. alternativ der Handhebel 6 selbst) in der Einrückrichtung B in eine Haltenut 22 einrückbar. Der Handhebel 6 verrastet vorzugsweise im eingerückten Zustand in der Haltenut 22. Durch die resultierende Federbelastung des Deckels 3 entgegen der Betätigungsdrehrichtung A wird der Vorsprung 21 und damit im Ergebnis auch der Handhebel 6 in der Haltenut 22 gehalten.

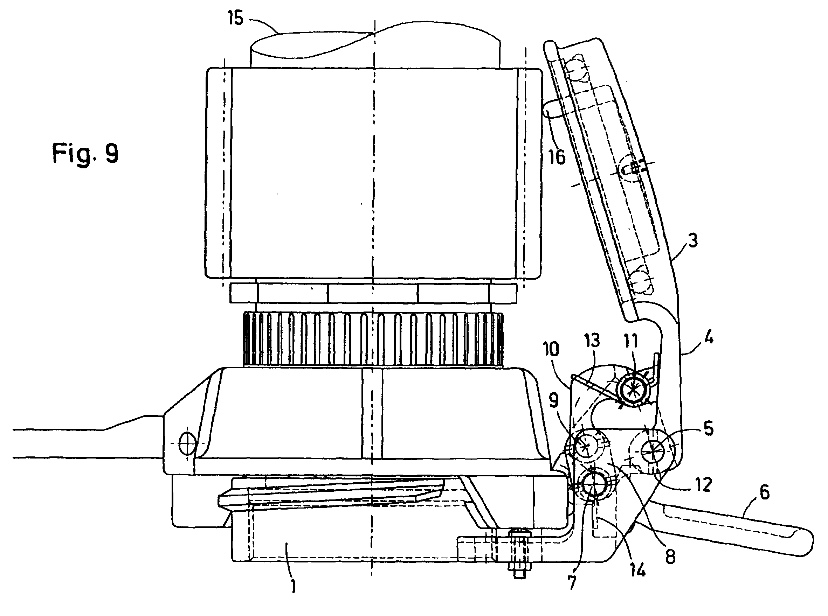

Beim Anschließen des Schlauchs 15 an das Stutzenende 2 wird gemäß Figur 9 über eine Betätigungsnase 16, die am Deckel 3 angeordnet ist, der Deckel 3 ein Stück weiter geöffnet. Hierdurch wird die Kurbelwelle 7 ein Stück in ihrer Betätigungsdrehrichtung A gedreht. Der Handhebel 6 ist somit nicht mehr entgegen der Betätigungsdrehrichtung A federbelastet. Er wird dadurch aus der Haltenut 22 freigegeben. Beim Entfernen des Schlauchs 15 von dem Stutzenende 2 wirkt somit auf die Kurbelwelle 7 ein resultierendes Drehmoment, wodurch der Deckel 3 selbsttätig geschlossen und danach in seiner geschlossenen Stellung verriegelt wird.

Mit der erfindungsgemäßen Konstruktion ist keine Schraubbewegung des Deckels 3 mehr erforderlich. Eine im Deckel angeordnete Dichtung 17, z.B. aus Gummi, eventuell aber auch aus einem anderen insbesondere dauerelastischen Material, unterliegt daher erheblich geringerem Verschleiß als bisher. Da ferner der Deckel 3 nunmehr unverlierbar dem Tankstutzen 1 zugeordnet ist, ist es nunmehr sinnvoll, auf der Oberseite des Deckels 3 Gewindebohrungen 18 anzuordnen, so daß ein Typenschild auf dem Deckel 3 befestigbar ist.

### Bezugszeichenliste

- 1: Tankstutzen
- 2: Stutzenende
- 3: Deckel
- 4: Schwenkarm
- 5: Schwenklager
- 6: Handhebel
- 7: Kurbelwelle
- 8: Kurbelzapfen
- 9: Kurbelpunkt
- 10: Verbindungselement
- 11: Hebelpunkt
- 12: Anschlag
- 13: Grundfederelement
- 14: Zusatzfederelement
- 15: Schlauch
- 16: Betätigungsnase
- 17: Dichtungselement
- 18: Gewindebohrungen
- 19: Gelenkpunkt
- 20: Haltefederelement
- 21: Vorsprung
- 22: Haltenut
- A: Betätigungsdrehrichtung
- B: Einrückrichtung

## Patentansprüche

1. Tankstutzen mit einem Stutzenende (2), auf das von oben ein Deckel (3) aufschwenkbar ist, wobei der Deckel (3) bei abgedecktem Stutzenende (2) verriegelt auf das Stutzenende (2) aufgedrückt ist.

2. Tankstutzen nach Anspruch 1,
**dadurch gekennzeichnet,**
- daß der Deckel (3) einen Schwenkarm (4) aufweist, über den der Deckel (3) seitlich vom Stutzenende (2) in einem Schwenklager (5) angelenkt ist,
- daß der Tankstutzen eine Kurbelwelle (7) mit einem Kurbelzapfen (8) mit einem bezüglich der Kurbelwelle (7) exzentrisch angeordneten Kurbelpunkt (9) aufweist,
- daß der Kurbelpunkt (9) über ein Verbindungselement (10) mit einem Hebelpunkt (11) des Schwenkarms (4) verbunden ist, wobei der Hebelpunkt (11) bezüglich des Schwenklagers (5) exzentrisch angeordnet ist, und
- daß das Verbindungselement (10) sowohl mit dem Kurbelpunkt (9) als auch mit dem Hebelpunkt (11) gelenkig verbunden ist,
- so daß der Deckel (3) durch Drehen der Kurbelwelle (7) in bzw. entgegen einer Betätigungsdrehrichtung (A) öffen-bzw. schließbar ist,
- daß beim Schließen des Deckels (3), also beim Drehen der Kurbelwelle (7) entgegen der Betätigungsdrehrichtung (A), der Kurbelpunkt (9) die Verbindungsgerade zwischen der Kurbelwelle (7) und dem Hebelpunkt (11) zumindest im wesentlichen erreicht und
- daß unmittelbar danach ein Weiterdrehen der Kurbelwelle (7) durch einen Anschlag (12) gestoppt wird.

3. Tankstutzen nach Anspruch 2,
**dadurch gekennzeichnet,**
daß die Kurbelwelle (7) zumindest bei geschlossenem Deckel (3) entgegen ihrer Betätigungsdrehrichtung (A) über ein Grundfederelement (13) federbelastet ist.

4. Tankstutzen nach Anspruch 3,
**dadurch gekennzeichnet,**
daß die Kurbelwelle (7) über das Grundfederelement (13) bei geöffnetem Deckel (3) entgegen ihrer Betätigungsdrehrichtung (A) federbelastet ist.

5. Tankstutzen nach Anspruch 3,
**dadurch gekennzeichnet,**
daß die Kurbelwelle (7) über das Grundfederelement (13) bei geöffnetem Deckel (3) in ihrer Betätigungsdrehrichtung (A) federbelastet ist.

6. Tankstutzen nach Anspruch 5,
**dadurch gekennzeichnet,**
daß die Kurbelwelle über ein Zusatzfederelement (14) sowohl bei geöffnetem als auch bei geschlossenem Deckel (3) entgegen ihrer Betätigungsdrehrichtung (A) federbelastet ist.

7. Tankstutzen nach Anspruch 6,
**dadurch gekennzeichnet,**
daß sich die von den Federelementen (13, 14) auf die Kurbelwelle (7) ausgeübten Drehmomente bei geöffnetem Deckel (3) ausgleichen, so daß der Deckel (3) selbsttätig in der geöffneten Stellung verharrt.

8. Tankstutzen nach Anspruch 7,
**dadurch gekennzeichnet,**
daß der Kurbelwelle (7) eine Betätigungsnase (16) zugeordnet ist, mittels derer die Kurbelwelle (7) beim Anschließen eines Schlauchs (15) an das Stutzenende (2) ein Stück entgegen ihrer Betätigungsdrehrichtung (A) gedreht wird, so daß bei Entfernen des Schlauchs (15) von dem Stutzenende (2) die von den Federelementen (13, 14) auf die Kurbelwelle (7) ausgeübten Drehmomente die Kurbelwelle (7) selbsttätig entgegen ihrer Betätigungsdrehrichtung (A) drehen und so den Deckel (3) selbsttätig schließen.

9. Tankstutzen nach Anspruch 6,
**dadurch gekennzeichnet,**
daß bei geöffnetem Deckel (3) das von dem Zusatzfederelement (14) entgegen der Betätigungsdrehrichtung (A) auf die Kurbelwelle (7) ausgeübte Drehmoment größer als das von dem Grundfederelement (13) in der Betätigungsdrehrichtung (A) auf die Kurbelwelle (7) ausgeübte Drehmoment ist.

10. Tankstutzen nach einem der Ansprüche 2 bis 9,
**dadurch gekennzeichnet,**
daß die Kurbelwelle (7) mittels eines Handhebels (6) betätigbar ist.

11. Tankstutzen nach Anspruch 4 und 10 oder 9 und 10,
**dadurch gekennzeichnet,**
daß der Handhebel (6) bei geöffnetem Deckel (3) in einer Einrückrichtung (B) in eine Haltenut (22) einrückbar ist.

12. Tankstutzen nach Anspruch 11,
**dadurch gekennzeichnet,**
daß der Handhebel (6) durch ein Haltefederelement (20) entgegen der Einrückrichtung (B) federbelastet ist.

13. Tankstutzen nach Anspruch 12,
**dadurch gekennzeichnet,**
daß der Handhebel (6) durch die Federbelastung des Deckels (3) entgegen der Betätigungsdrehrichtung (A) in der Haltenut (22) haltbar ist.

14. Tankstutzen nach Anspruch 13,
**dadurch gekennzeichnet,**
daß beim Anschließen eines Schlauchs (15) an das Stutzenende (2) die Kurbelwelle (7) ein Stück in ihrer Betätigungsdrehrichtung (A) gedreht wird, so daß der Handhebel (6) aus der Haltenut (22) freigegeben wird.

15. Tankstutzen nach einem der Ansprüche 11 bis 14,
**dadurch gekennzeichnet,**
daß der Handhebel (6) im eingerückten Zustand in der Haltenut (22) verrastet.

16. Tankstutzen nach einem der Ansprüche 2 bis 15,
**dadurch gekennzeichnet,**
daß die Kurbelwelle (7) als durchgehende Kurbelwelle (7) und das Verbindungselement (10) als sichelförmiges Verbindungselement (10) ausgebildet sind.

17. Tankstutzen nach einem der Ansprüche 2 bis 16,
**dadurch gekennzeichnet,**
daß die Kurbelwelle (7) in der geschlossenen Stellung des Deckels (3) zwischen dem Kurbelpunkt (9) und dem Hebelpunkt (11) angeordnet ist.

18. Tankstutzen nach einem der Ansprüche 2 bis 17,
**dadurch gekennzeichnet,**
daß der Deckel (3) ein Dichtungselement (17), vorzugsweise aus dauerelastischem Material, aufweist, welches in der geschlossenen Stellung des Deckels (3) an dem Stutzenende (2) anliegt.
